# EUROPEAN PATENT SPECIFICATION

(11) **EP 0 605 846 B1**
(45) Date of publication and mention of the grant of the patent: **27.08.1997**
(21) Application number: 93120740.1
(22) Date of filing: 22.12.1993
(51) Int. Cl.: G09G 3/36

(54) **Active matrix liquid crystal display device**
Flüssigkristallanzeigevorrichtung mit aktiver Matrix
Dispositif d'affichage à cristaux liquides à matrice active

(30) Priority: 25.12.1992 JP 359186/92
(43) Date of publication of application: 13.07.1994
(73) Proprietor: SONY CORPORATION, Tokyo (JP)
(72) Inventor: Uchino, Katsuhide, c/o Sony Corporation, Shinagawa-ku, Tokyo (JP); Maekawa, Toshikazu, c/o Sony Corporation, Shinagawa-ku, Tokyo (JP); Ichikawa, Hiroaki, c/o Sony Corporation, Shinagawa-ku, Tokyo (JP)
(74) Representative: Müller, Frithjof E., Dipl.-Ing.

(56) References cited:
- EP-A- 0 424 958
- EP-A- 0 448 105
- DE-A- 3 137 245
- PATENT ABSTRACTS OF JAPAN vol. 14, no. 263 (E-938) 7 June 1990 & JP-A-02 081 585 (TOSHIBA CO.)

## Description

### BACKGROUND OF THE INVENTION

### 1. Field of the Invention

This invention relates to a liquid crystal display device of the active matrix type, and more particularly to a technique of preventing charge from remaining in liquid crystal picture elements in a liquid crystal display device of the active matrix type.

### 2. Description of the Related Art

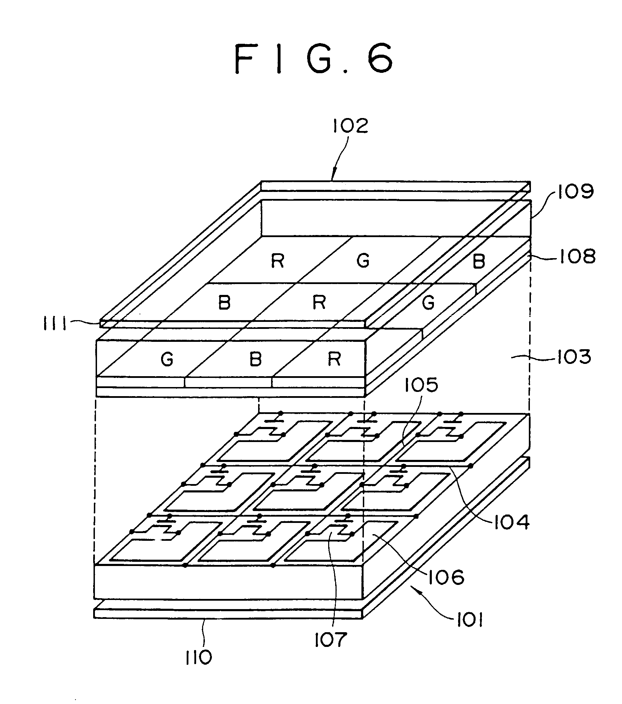

Conventional liquid crystal display devices of the active matrix type have such a general construction as shown in FIG. 6. Referring to FIG. 6, the liquid crystal display device shown includes a liquid crystal layer 103 held between a driving circuit board 101 and an opposing circuit board 102 which are disposed in an opposing relationship to each other with a predetermined gap left therebetween. Gate lines 104 and signal lines 105 are disposed in an intersecting relationship with each other in a matrix on a surface of the driving circuit board 101, and picture element electrodes 106 are formed at individual intersecting points between the gate lines 104 and the signal lines 105. Also picture element transistors 107 are formed corresponding to the individual picture element electrodes 106. The gate electrodes of the picture element transistors 107 are connected to corresponding ones of the gate lines 104, and the drain electrodes of the picture element transistors 107 are connected to corresponding ones of the picture element electrodes 106 while the source electrodes of the picture element transistors 107 are connected to corresponding ones of the signal lines 105. Meanwhile, common electrodes 108 and a color filter layer 109 are provided on an inner face of the opposing circuit board 102. Liquid crystal picture elements are defined in a matrix by the liquid crystal layer 103 held between the common electrodes 108 and the picture element electrodes 106 opposing to each other. The two circuit boards 101 and 102 are adhered to each other, and polarization plates 110 and 111 are adhered to outer surfaces of the circuit boards 101 and 102.

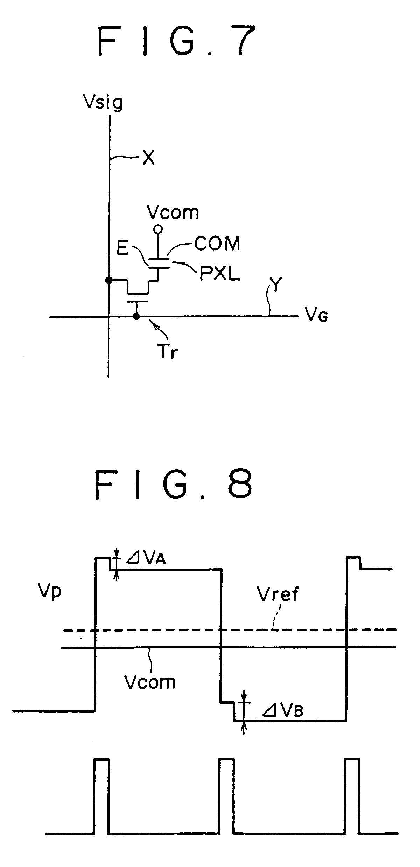

FIG. 7 is a circuit diagram of an equivalent circuit of a liquid crystal picture element in such a conventional liquid crystal display device as shown in FIG. 6. Referring to FIG. 7, the gate electrode of a picture element transistor Tr is connected to a gate line Y so that a gate pulse V_{G} is applied to the gate electrode for a predetermined selection period. The source electrode of the picture element transistor Tr is connected to a signal line X so that an image signal Vsig, which reverses after each one field period or one horizontal scanning period with reference to a predetermined reference potential, is supplied to the source electrode. The drain electrode of the picture element transistor Tr is connected to a corresponding picture element electrode E. A liquid crystal picture element PXL is defined by the liquid crystal layer held between the picture element electrode E and a common electrode COM opposing to the picture element electrode E. A predetermined reference potential Vcom is applied to the common electrode COM. It is to be noted that the liquid crystal picture element PXL is a capacitive load and normally has an auxiliary capacitance in addition to the capacitance of the liquid crystal.

FIG. 8 illustrates operation of the liquid crystal picture element shown in FIG. 7. Referring to FIG. 8, each time a gate pulse V_{G} is applied, the picture element transistor Tr conducts so that an image signal Vsig is written into the liquid crystal picture element. After the gate pulse V_{G} disappears, the image signal Vsig is held in the liquid crystal picture element. When another gate pulse V_{G} is applied at a next selection timing, another image signal Vsig reversed with respect to a predetermined center potential Vref is written into the liquid crystal picture element. In principle, in order to effect ac driving, the reference potential Vcom to be applied to the common electrode COM is set so as to coincide with the center potential Vref of the image signal Vsig. However, an actual liquid crystal picture element potential Vp must necessarily be optimized by adjusting the reference potential Vcom since actually it shifts downwardly from the level of the image signal Vsig. As seen from FIG. 8, when a gate pulse V_{G} falls, a voltage drop is produced by a capacitive coupling between the gate electrode and the drain electrode of the picture element transistor Tr, and consequently, the picture element potential Vp drops by ΔV_{A} on the positive polarity side and drops by ΔV_{B} on the negative polarity side. The reference potential Vcom optimized taking the voltage drops into consideration is given by Vref - (ΔV_{A} + ΔV_{B}).

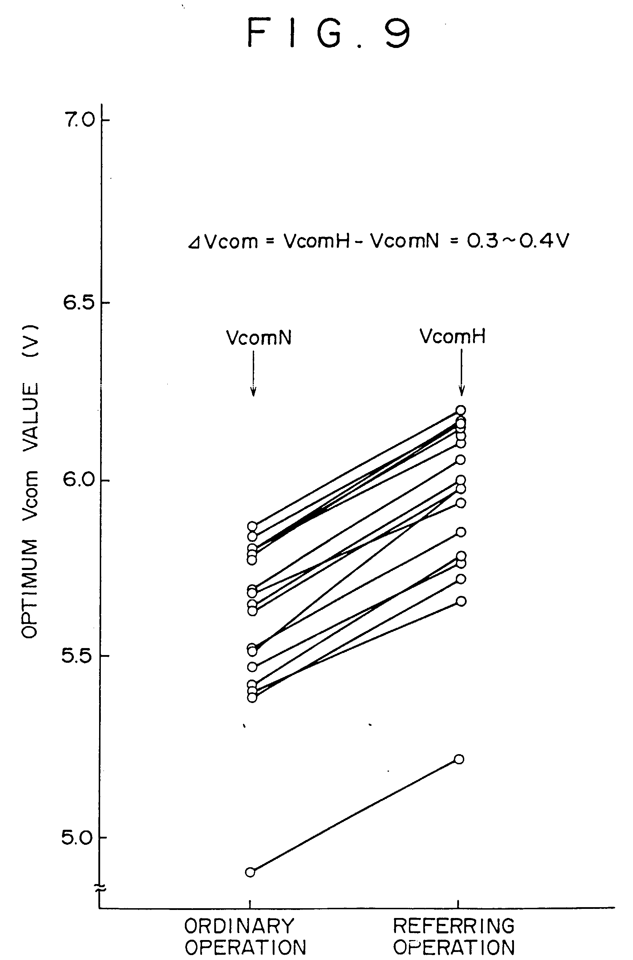

FIG. 9 illustrates the difference between the optimum values of the reference potential Vcom when an ordinary operation is performed and when a referring operation is performed. The data of the graph were obtained from a measurement conducted for a large number of samples in order to detect a dispersion of the reference potential Vcom. The optimum reference potential in an ordinary operation is represented by VcomN. The optimum reference potential VcomN is obtained by subtracting a voltage drop caused by a capacitive coupling from the center potential Vref of the image signal Vsig as described above with reference to FIG. 8. Meanwhile, in a referring operation, the image signals Vsig are supplied while all of the picture element transistors are always in a conducting state. In this instance, since no gate pulse falls, no voltage drop by a capacitive coupling is produced.
Consequently, the optimum reference potential VcomH substantially coincides with the center potential Vref of the image signals Vsig. Accordingly, for each sample, the voltage drop by a capacitive coupling is given by VcomH - VcomN = ΔVcom . As apparently seen from the graph of FIG. 9, the voltage drop ranges from 0.3 to 0.4 V with all of the samples and the dispersion is very small. Accordingly, it is comparatively easy to set, for individual liquid crystal display devices of the active matrix type, an optimum value for the reference potential Vcom which is compensated for by a substantially fixed voltage drop.

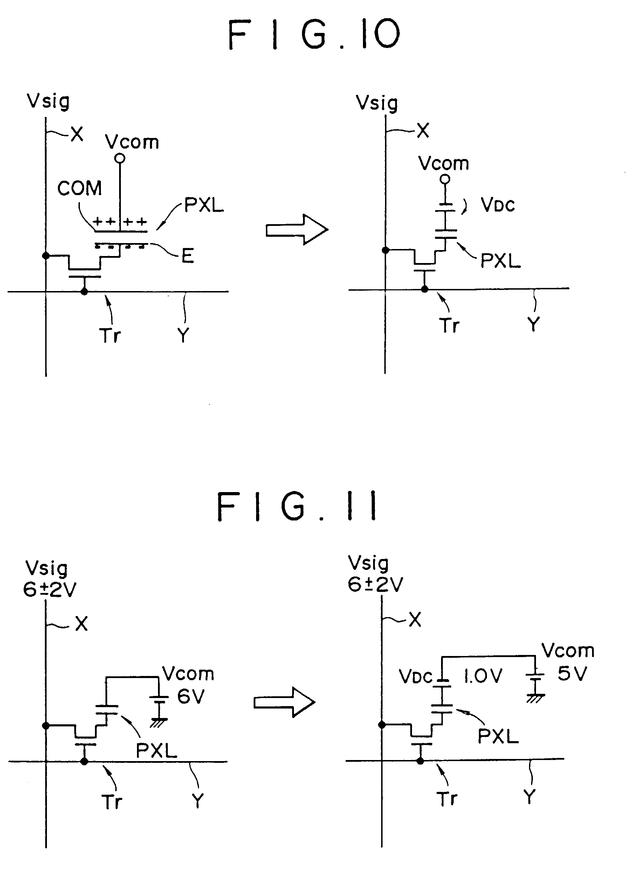

However, the conventional liquid crystal display device of the active matrix type has a subject to be solved in that, since residual of charge actually occurs with liquid crystal picture elements, the optimum value of the reference potential Vcom set once undergoes an apparent variation. This will be described briefly with reference to FIG. 10. If a liquid crystal picture element PXL is driven continuously, then charge is accumulated in an interface between the common electrode COM and an orientation film, another interface between the picture element electrode E and the orientation film and so forth to make a charge residual condition. If ac driving of the liquid crystal picture element is stopped once in such a charge residual condition, then this results in connection of an imaginary dc power source VDC to the liquid crystal picture element PXL. Accordingly, when ac driving of the liquid crystal picture element PXL is started again, an offset of the dc voltage VDC is added to the optimum value of the reference potential Vcom set precedently so that the optimum value of the reference potential Vcom is varied apparently.

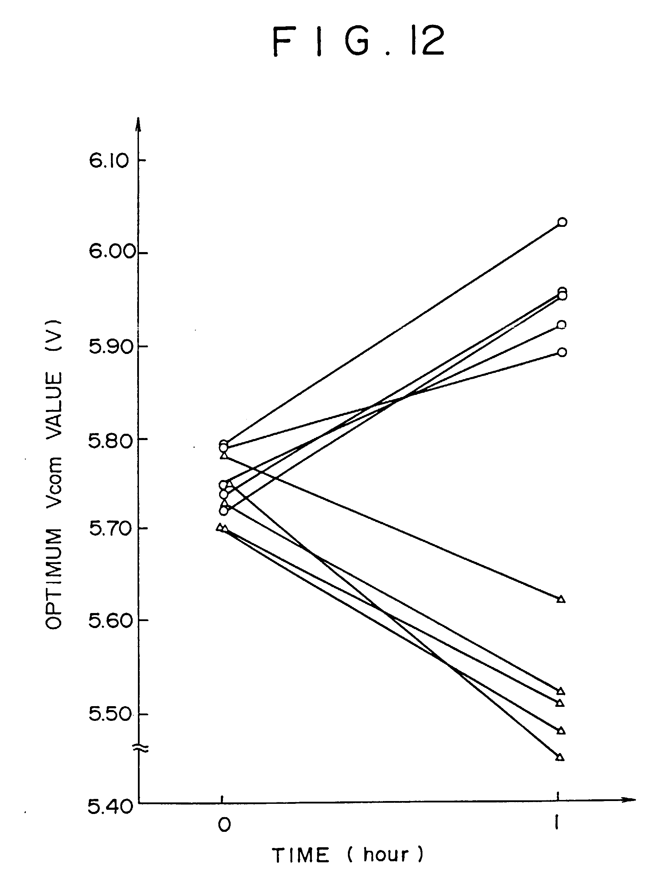

This will be described using detailed values with reference to FIG. 11. It is assumed that an image signal Vsig of 6 ± 2 V is supplied to the signal line X. If a voltage drop caused by a capacitive coupling described above is not taken into consideration, then the reference potential Vcom is set to 6 V so that it may coincide with the central potential of the image signal Vsig. It is also assumed that the liquid crystal picture element PXL is driven continuously, and consequently, residual of charge occurs with the liquid crystal picture element PXL so that a dc offset VDC is added to the reference potential Vcom. If the liquid crystal picture element is driven in this condition, then the effective reference potential Vcom changes to 1 . V + 6 V = 7 V In this condition, complete ac driving cannot be performed. In other words, as a result of the residual of charge, the optimum reference potential Vcom apparently varies from 6 V to 5 V. Since such dc offset amount relies upon the time of continuous driving and also upon the magnitude of the image signal and so forth, a dispersion of the optimum reference potential Vcom occurs even within a single panel.

FIG. 12 illustrates an example of the variation of the optimum value of the reference potential Vcom with respect to time. In order to obtain the measurement data of FIG. 12, ten samples were prepared. Each of the samples was driven by ac which was reversed for each one horizontal period, and the image signal Vsig was set to 6 V fixed. Further, in order to accelerate residual of charge, the potential to the common electrode was set to 1.5 V for a half of the samples and to 10.5 V for the remaining half. The optimum value of the reference potential Vcom was measured at an initial stage and after lapse of time of one hour to examine the variation of the same with respect to time. The optimum value of the reference potential Vcom of 5.70 to 5.79 V at the initial stage varied between 5.45 V and 6.03 V after lapse of time of one hour. Although actually such an extreme charge residual condition may not be applicable, residual of charge actually occurs with a liquid crystal picture element and the optimum value of the reference potential Vcom varies as a result of continuous driving of the liquid crystal picture element for a long period of time. Further, a dispersion in amount of residual charge occurs even within a single panel.

The conventional liquid crystal display device of the active matrix type thus has a subject to be solved in that, since the optimum value of the reference potential Vcom varies, a seizure of a screen or a residual image occurs, which deteriorates the picture quality remarkably. Further, in addition to a seizure, deteriorations of the picture quality such as reduction in contrast, flickering and so forth make a problem. Since the variation of the optimum value of the reference potential Vcom with respect to time by residual of charge cannot be compensated for at an initial stage, this is a serious subject to be solved for the quality assurance.

Patent Abstracts of Japan, vol. 14, no. 263 (E-0938), 7 June 1990 disclose a liquid crystal display device comprising switching means provided between a picture element electrode and a common electrode for discharging parasitic charges for improving picture quality with few flickers.

### SUMMARY OF THE INVENTION

It is an object of the present invention to provide a liquid crystal display device of the active matrix type which effectively prevents residual of charge in liquid crystal picture elements with respect to time.

In order to attain the object described above, according to an aspect of the present invention, there is provided a liquid crystal display device of the active matrix type, which comprises the features of appended claim 1.

In the liquid crystal display device of the active matrix type, the predetermined reference potential is supplied to the common electrodes while image signals are applied to the individual picture element electrodes by way of the signal lines and the picture element transistors to effect ac driving of the liquid crystal picture elements. After such ac driving is performed, the common electrodes and the picture element electrodes are connected to an equal potential to each other by way of the discharge means and picture element transistors in on-state and transissions means in conducting condition forming a closed loop to discharge all residual charges and especially these remaining in the liquid crystal picture elements thereby to prevent the variation of the reference potential. Consequently, once the reference potential is set to an optimum value at the stage when the product is completed, there is no necessity of re-adjusting the reference potential since then, and accordingly, there is an effect in that remarkable reduction of the cost required for such adjustment can be achieved. Further, since the optimum value of the reference potential thus set is stable with respect to time, there is another effect in that deteriorations of an image such as a seizure, reduction of the contrast and flickering are eliminated.

According to another aspect of the present invention, there is provided a method of driving a liquid crystal display device of the active matrix type said method having the features of appended claim 6.

The above and other objects, features and advantages of the present invention will become apparent from the following description and the appended claims, taken in conjunction with the accompanying drawings in which like parts or elements are denoted by like reference characters.

### BRIEF DESCRIPTION OF THE DRAWINGS

FIG. 1 is a block diagram of a liquid crystal display device of the active matrix type with a charge residual prevention function showing a preferred embodiment of the present invention;
FIG. 2 is a block diagram of another liquid crystal display device of the active matrix type with a charge residual prevention function showing another preferred embodiment of the present invention;
FIG. 3 is a graph showing the variation characteristic of the optimum value of a reference potential in the active matrix liquid crystal display device shown in FIG. 2;
FIG. 4 is a block diagram of a further liquid crystal display device of the active matrix type with a charge residual prevention function showing a further preferred embodiment of the present invention;
FIG. 5 is a graph showing the variation characteristic of the optimum value of a reference potential in the active matrix liquid crystal display device shown in FIG. 4;
FIG. 6 is a perspective view showing a general construction of a conventional liquid crystal panel of the active matrix type;
FIG. 7 is a circuit diagram of an equivalent circuit of a liquid crystal picture element in the conventional active matrix liquid crystal display device shown in FIG. 6;
FIG. 8 is a waveform diagram illustrating operation of the liquid crystal picture element shown in FIG. 7;
FIG. 9 is a graph illustrating the variation of the optimum value of a reference potential in the conventional active matrix liquid crystal display device shown in FIG. 6;
FIG. 10 is a schematic diagram illustrating a subject to be solved of the conventional active matrix liquid crystal display device shown in FIG. 6;
FIG. 11 is a similar view but illustrating another subject to be solved of the conventional active matrix liquid crystal display device shown in FIG. 6; and
FIG. 12 is a graph illustrating the dispersion of the optimum value of a reference potential in the conventional active matrix liquid crystal display device shown in FIG. 6.

### DETAILED DESCRIPTION OF THE PREFERRED EMBODIMENTS

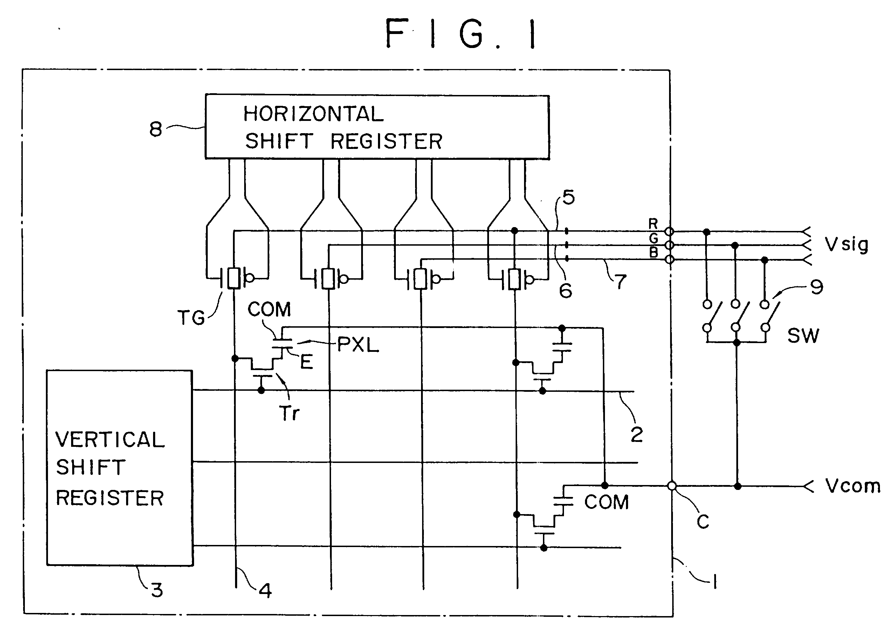

Referring first to FIG. 1, there is shown a liquid crystal display device of the active matrix type with a charge residual prevention function according to the present invention. The active matrix liquid crystal display device shown includes a liquid crystal panel 1. The liquid crystal panel 1 includes liquid crystal picture elements PXL formed from a liquid crystal layer (not shown in FIG. 1) held between picture element electrodes E arranged in a matrix and common electrodes COM opposing to the picture element electrodes E, and picture element transistors Tr corresponding to the liquid crystal display elements PXL. The gate electrodes of the picture element transistors Tr are connected to gate lines 2. The gate lines 2 are connected to a vertical shift register 3 so that gate pulses are successively applied to the gate lines 2. The source electrodes of the picture element transistors Tr are connected to signal lines 4. In the present embodiment, the liquid crystal panel 1 effects color display of the primary colors of R (red), G (green) and B (blue). To this end, the signal lines 4 are connected to common input signal lines 5, 6 and 7 for the primary colors of R, G and B by way of transmission gates TG. The individual transmission gates TG are controlled to be successively rendered conducting by a horizontal shift register 8. The input signal lines 5, 6 and 7 are connected to input terminals R, G and B for the hues assigned to them so that R, G and B image signals Vsig are supplied to them from the outside. Meanwhile, the common electrodes COM are supplied with a reference potential Vcom set to an optimum value in advance from the outside by way of a common terminal C. The image signals Vsig are applied to the individual picture element electrodes E by way of the signal lines 4 and the picture element transistors Tr to effect ac driving of the liquid crystal picture elements PXL. In this instance, the picture element transistors Tr are selected in a line sequential relationship by the vertical shift register 3 while the image signals Vsig supplied from the input terminals R, G and B are distributed to the signal lines 4 by way of the transmission gates TG which are successively rendered conducting by the horizontal shift register 8.

The active matrix liquid crystal display device further includes discharge means 9 for connecting the common electrodes COM and the picture element electrodes E to an equal potential to each other so that, before ac driving is resumed after it is stopped, charge residual in the liquid crystal picture elements PXL is discharged thereby to prevent the variation of the preset reference potential Vcom. In the present embodiment, the discharge means 9 is constituted from discharge elements interposed between the input terminals R, G and B and the common terminal C. The discharge elements here are constituted from switches SW so that, at the point of time when ac driving is stopped, all of the picture element transistors Tr are put into an on-state and then operate in the on-state. Thereafter, the picture element transistors Tr are changed over to an off-state.

A charge residual prevention operation will be described in detail subsequently with reference to FIG. 1. First, at the point of time when ordinary ac operation is completed, the vertical shift register 3 is controlled to put all of the picture element transistors Tr into an on-state by way of the gate lines 2. Simultaneously, the horizontal shift register 8 is controlled to put all of the transmission gates TG into a conducting condition. In this condition, the switches SW constituting the discharge means 9 are turned on. As a result, closed loops including the common terminal C - switches SW - input terminals R, G and B - transmission gates TG - signal lines 4 - picture element transistors Tr in order are formed between the common electrodes COM and the picture element electrodes E so that charge accumulated in the individual liquid crystal picture elements PXL is discharged rapidly. In this manner, in the present embodiment, since discharging processing of the liquid crystal picture elements PXL can be performed in a comparatively short time by utilizing the externally provided switches SW, they can be utilized effectively when an image inspection or the like is to be performed in a manufacturing procedure or at the stage of shipment of the product. In particular, it is possible to perform an appropriate image inspection after the factor of a variation of the preset reference potential Vcom such as a seizure, flickering or reduction in contrast caused by residual charge is eliminated. It is to be noted that, while the externally provided switches SW are employed in the present embodiment, the present invention is not necessarily limited to this, and the discharge means 9 may be incorporated integrally in the inside of the liquid crystal panel 1.

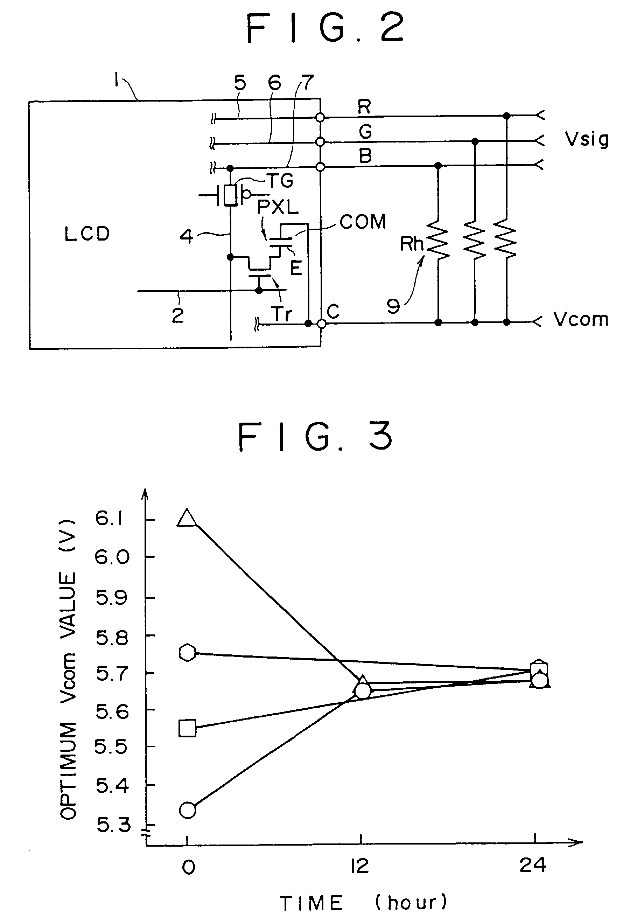

Referring now to FIG. 2, there is shown another liquid crystal display device of the active matrix type with a residual charge prevention function according to the present invention. The active matrix liquid crystal display device shown is a modification and has a basic construction similar to that of the active matrix liquid crystal display device shown in FIG. 1. The present active matrix liquid crystal display device is different from the active matrix liquid crystal display device of FIG. 1 only in that the discharge means 9 is constituted from high resistance elements Rh connected between the input terminals R, G and B and the common terminal C. The high resistance elements Rh may be provided externaly or provided in the liquid crystal panel (LCD) 1.

Subsequently, a residual charge prevention operation of the present embodiment will be described in detail. Referring to FIG. 2, a common electrode COM and a picture element E which constitute a liquid crystal picture element PXL are connected to an equal potential to each other by way of a closed loop including a high resistance element Rh. In particular, the closed loop shown includes the common terminal C - high resistance element Rh - input terminal B - input signal line 7 - transmission gate TG - signal line 4 - picture element transistor Tr in order. After an ordinary operation is completed, the transmission gate TG and the picture element transistor Tr are put into a non-conducting condition. In this condition, however, a little leak current flows. Accordingly, after a long interval of time passes, charge accumulated in the liquid crystal picture element PXL is discharged by way of the closed loop. It is to be noted that the high resistance element Rh is set to a comparatively high resistance value (for example, 47 kΩ) comparing with its input impedance so that it does not have a bad influence upon an ordinary operation. In the present embodiment, since the high resistance elements Rh are used in place of switches as the discharge means 9, accumulated charge can be discharged naturally without performing any switching operation or the like. However, a comparatively long time is required for the discharge.

FIG. 3 illustrates a discharge characteristic of the active matrix liquid crystal display device shown in FIG. 2. Since charge is accumulated in the liquid crystal picture elements of individual samples at the point of time when ordinary ac driving is stopped, the optimum value of the reference potential Vcom is dispersed within the range from 5.3 V to 6.1 V. If the optimum value of the reference potential Vcom is measured at a point of time after the liquid crystal display device is left for 12 hours since then, the optimum values of the reference potential Vcom of all of the samples are already back substantially at 5.70 V. This value is equal to the value of the reference potential Vcom at an initial stage set in advance for all of the samples.

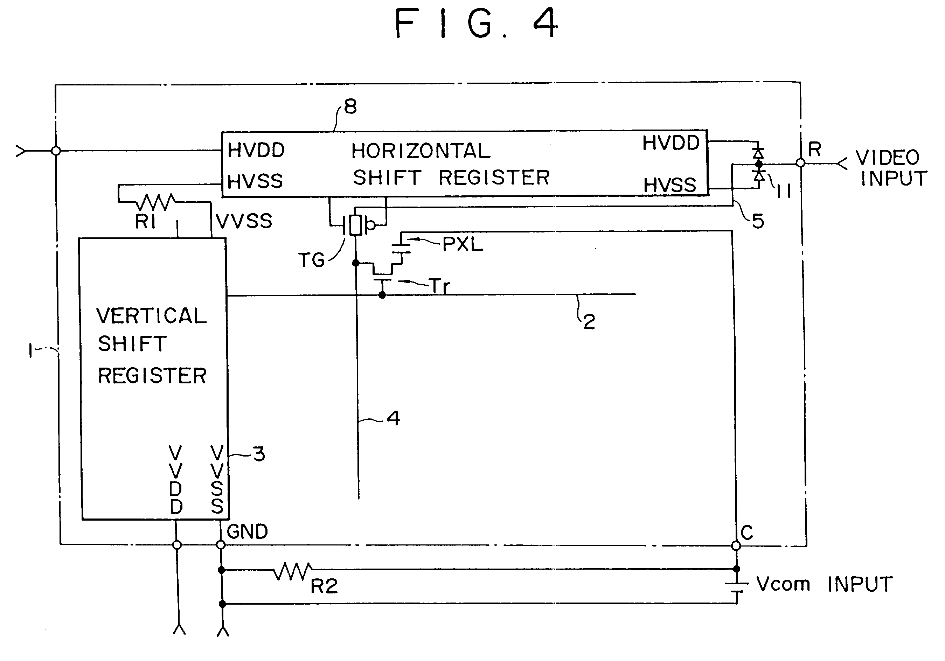

Referring now to FIG. 4, there is shown a further liquid crystal display device of the active matrix with a residual charge prevention function according to the present invention. The present active matrix liquid crystal display device is a modification and has a basically similar construction to the the active matrix liquid crystal display device of FIG. 1. The active matrix liquid crystal display device of the present embodiment is characterized in that a closed discharge loop is constructed by means of a grounding line provided in the liquid crystal panel 1. In particular, the vertical shift register 3 has a power source line VVDD and a grounding line VVSS. A predetermined power source voltage is supplied from the outside to the power source line VVDD by way of a corresponding power source terminal. Meanwhile, the grounding line VVSS is grounded by way of a corresponding grounding terminal GND. Also the horizontal shift register 8 has a power source line HVDD and a grounding line HVSS. A predetermined power source voltage is supplied from the outside to the power source line HVDD by way of a corresponding power source terminal. Meanwhile, the grounding line HVSS is internally connected to the grounding line VVSS of the vertical shift register 3 by way of a predetermined resistance element R1. Meanwhile, an internal input signal line 5 is connected to an input terminal R (only an input terminal R corresponding to a red picture element is shown in FIG. 4 for simplified illustration) of the liquid crystal panel 1 so that a video input is received from the outside. An input protective element 11 is interposed between the input signal line 5 and the grounding line HVSS. The input protective element 11 may be constituted from a protective diode. Further, a predetermined reference potential Vcom is inputted from the outside to the common terminal C. In addition, a resistance element R2 is externally connected between the common terminal C and the grounding terminal GND. The resistance value of the high resistance element R2 may be set, for example, to 200 kΩ.

In the active matrix liquid crystal display device of the present embodiment, the high resistance element R2 constitute discharge means, and a predetermined closed discharge loop is formed between the picture element electrode and the common electrode of each liquid crystal picture element PXL. In particular, the closed loop is constituted from the common terminal C - high resistance element R2 - grounding terminal GND - internal grounding line VVSS - resistance element R1 - internal grounding line HVSS - protective element 11 - input signal line 5 - transmission gate TG - picture element transistor Tr in order.

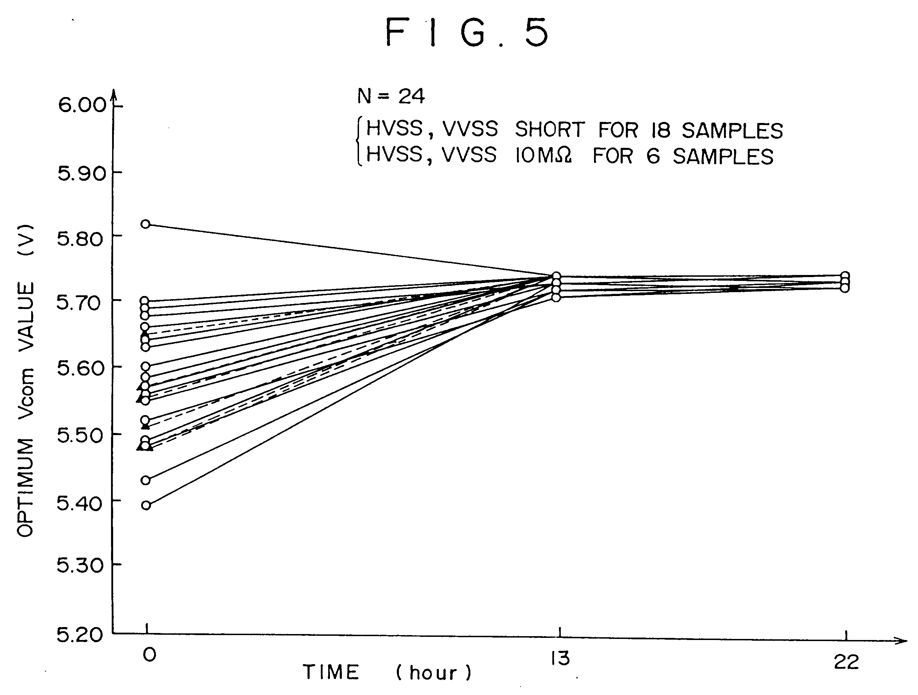

FIG. 5 illustrates a discharge characteristic of the active matrix liquid crystal display device shown in FIG. 4. The axis of ordinate represents the optimum value of the reference potential Vcom and the axis of abscissa represents the elapsed time. Immediately after ordinary ac driving was performed for a plurality of samples, the optimum value of the reference potential Vcom value was measured for the samples, and then, after lapse of a predetermined interval of time, the optimum value of the reference potential Vcom was measured again. More particularly, twenty four samples were prepared, and for eighteen ones of the samples, the grounding line VVSS on the vertical shift register side and the grounding line HVSS on the horizontal shift register side were short-circuited. In other words, the value of the resistance element R1 was reduced to 0. For the remaining six samples, the value of the resistance elements R1 was set to 10 MΩ. As apparently seen from the graph of FIG. 5, at the point of time when ac driving was stopped, the optimum values of the reference potential Vcom were dispersed within the range from about 5.4 V to 5.8 V among the samples due to residual charge of the liquid crystal picture elements. After lapse of 13 hours after ac driving was stopped, the optimum values of the reference potential Vcom converged to or around 5.7 V with substantially all of the samples. It can be seen that, after lapse of 22 hours, the optimum values of the reference potential Vcom were stabilized completely.

Having now fully described the invention, it will be apparent to one of ordinary skill in the art that many changes and modifications can be made thereto without departing from the scope of the invention as set forth in the appended claims.

## Claims

1. An active-matrix liquid crystal display device comprising :
a plurality of display elements (PXL) arranged in a matrix, each display element (PXL) comprising opposed electrodes with a liquid crystal material therebetween and is associated with a pixel transistor (Tr), said opposed electrodes comprising a pixel electrode (E) and a common electrode (COM);
transmission means (TG) for providing a video signal (Vsig) to the pixel electrode (E) through a signal line (4) and corresponding pixel transistor (Tr);
means for providing a reference voltage (Vcom) to the common electrode (COM);
means (3) to put all picture element transistors (Tr) into the on-state and
means (8) to put all transmission means (TG) into a conducting condition when ordinary ac operation is completed;
means (9) for discharging accumulated charge in the display elements (PXL) by connecting the common electrode (COM) and the pixel electrode (E),
whereby in operation a closed loop is formed from said common electrodes (COM) via said signal lines (4), said pixel transistors (Tr) in on-state to said pixel electrodes (E) and with transmission means (TG) in conducting condition.

2. An active-matrix liquid crystal display device as claimed in claim 1, further comprising an input terminal (R, G, B) connected to the signal lines (4) and a common terminal (C) connected to the common electrodes (COM), and said discharge means (9) is provided between the input and common terminals.

3. An active-matrix liquid crystal display device as claimed in claim 1 or 2, wherein said discharge means (9) comprises a switch element (SW).

4. An active-matrix liquid crystal display device as claimed in claim 1 or 2, wherein said discharge means (9) comprises a high resistive element (Rh).

5. An active-matrix liquid crystal display device as claimed in claim 1, further including a ground terminal (GND) connected to an internal ground line (VVSS, HVSS), a common terminal (C) connected to the common electrodes (COM), and a protective element (11) interposed between said internal ground line and each of said signal lines (4) while said discharge means includes a high resistance element (R2) connected between said ground terminal (GND) and said common terminal (C), whereby a closed discharge loop is formed from each of said common electrodes (COM), said common terminal (C), said high resistance element (R2), said ground terminal (GND), said internal ground line (VVSS, HVSS), said protective element (11), one of said signal lines (4), one of said pixel transistors (Tr) and one of said pixel electrodes (E) in order.

6. A method of driving a liquid crystal display device of the active matrix type which includes a plurality of liquid crystal display elements formed from a liquid crystal layer held between a plurality of picture element electrodes arranged in a matrix and a plurality of common electrodes opposing to said picture element electrodes, and a plurality of switching elements for individually switching said liquid crystal picture elements and wherein said liquid crystal picture elements are driven to be reversed by ac with reference to a predetermined reference potential, comprising the step of:
connecting said common electrodes and said picture element electrodes to an equal potential to each other before ac driving is resumed after it is stopped via signal lines and said switching elements in conducting condition forming a closed loop to discharge the charge accumulated in said liquid crystal picture elements thereby to prevent the variation of the reference potential.

7. A liquid crystal display device as claimed in claim 1, wherein said discharge means is provided on an inside of a liquid crystal panel including said display elements (PXL) and said pixel transistors (Tr).

8. A liquid crystal display device as claimed in claim 1, wherein said discharge means is provided on an outside of a liquid crystal panel including said display elements (PXL) and said pixel transistors (Tr).

## Patentansprüche

1. Flüssigkristallanzeigevorrichtung mit Aktivmatrix, mit:
- einer Vielzahl von Anzeigeelementen (PXL), die in einer Matrix angeordnet sind, wobei jedes Bildelement (PXL) einander gegenüberstehende Elektroden aufweist, zwischen denen ein Flüssigkristallmaterial liegt, und ihm ein Pixeltransistor (Tr) zugeordnet ist, wobei die einander gegenüberstehenden Elektroden eine Pixelelektrode (E) und eine gemeinsame Elektrode (COM) umfassen;
- einer Übertragungseinrichtung (TG) zum Liefern eines Videosignals (Vsig) über eine Signalleitung (4) und einen entsprechenden Pixeltransistor (Tr) an die Pixelelektrode (E);
- einer Einrichtung zum Liefern einer Bezugsspannung (Vcom) an die gemeinsame Elektrode (COM);
- einer Einrichtung (3) zum Versetzen aller Bildelementtransistoren (Tr) in den Ein-Zustand; und
- einer Einrichtung (8) zum Versetzen aller Übertragungseinrichtungen (TG) in den leitenden Zustand, wenn normaler Wechselspannungsbetrieb abgeschlossen wird;
- einer Einrichtung (9) zum Entladen angesammelter Ladungen in den Anzeigeelementen (PXL) durch Verbinden der gemeinsamen Elektrode (COM) und der Pixelelektrode (E);
- wobei im Betrieb von den gemeinsamen Elektroden (COM) über die Signalleitungen (4), die in Ein-Zustand befindlichen Pixeltransistoren (Tr) zu den Pixelelektroden (E) eine geschlossene Schleife ausgebildet wird, wobei sich die Übertragungseinrichtung (TG) in leitendem Zustand befindet.

2. Flüssigkristallanzeigevorrichtung mit Aktivmatrix nach Anspruch 1, ferner mit einem mit den Signalleitungen (4) verbundenen Eingangsanschluss (R, G, B) und mit einem mit den gemeinsamen Elektroden (COM) verbundenen gemeinsamen Anschluss (C), wobei die Entladungseinrichtung (9) zwischen dem Eingangs- und dem gemeinsamen Anschluss vorhanden ist.

3. Flüssigkristallanzeigevorrichtung mit Aktivmatrix nach Anspruch 1 oder Anspruch 2, bei der die Entladungseinrichtung (9) ein Schaltelement (SW) aufweist.

4. Flüssigkristallanzeigevorrichtung mit Aktivmatrix nach Anspruch 1 oder Anspruch 2, bei dem die Entladungseinrichtung (9) ein Element (Rh) hohen Widerstands aufweist.

5. Flüssigkristallanzeigevorrichtung mit Aktivmatrix nach Anspruch 1, ferner mit einem mit einer internen Masseleitung (VVSS, HVSS) verbundenen Masseanschluss (GND), einem mit den gemeinsamen Elektroden (COM) verbundenen gemeinsamen Anschluss (C) und einem Schutzelement (11), das zwischen die interne Masseleitung und jede der Signalleitungen (4) eingefügt ist, während die Entladungseinrichtung ein Element (R2) hohen Widerstands aufweist, das zwischen den Masseanschluss (GND) und den gemeinsamen Anschluss (C) geschaltet ist, wodurch eine geschlossene Entladungsschleife gebildet ist, die der Reihe nach von jeder der gemeinsamen Elektroden (COM) zum gemeinsamen Anschluss (C), dem Element (R2) hohen Widerstands, dem Masseanschluss (GND), der internen Masseleitung (VVSS, HVSS), dem Schutzelement (11), einer der Signalleitungen (4), einem der Pixeltransistoren (Tr) und einer der Pixelelektroden (E) verläuft.

6. Verfahren zum Ansteuern einer Flüssigkristallanzeigevorrichtung vom Aktivmatrixtyp, die eine Vielzahl von Flüssigkristall-Anzeigeelementen, die aus einer Flüssigkristallschicht bestehen, die zwischen einer Vielzahl von in einer Matrix angeordneten Bildelementelektroden und einer Vielzahl von diesen Bildelementelektroden gegenüberstehenden gemeinsamen Elektroden gehalten wird, und eine Vielzahl von Schaltelementen zum individuellen Schalten dieser Flüssigkristall-Bildelemente umfasst, wobei die Flüssigkristall-Bildelemente so angesteuert werden, dass sie durch eine Wechselspannung in bezug auf ein vorbestimmtes Bezugspotential invertiert werden, mit dem folgenden Schritt: - Anschließen der gemeinsamen Elektroden und der Bildelementelektroden an jeweils dasselbe Potential bevor eine Wechselspannungsansteuerung wiederaufgenommen wird, nachdem sie unterbrochen wurde, und zwar über Signalleitungen und die Schaltelemente im leitenden Zustand, die eine geschlossene Schleife zum Entladen der in den Flüssigkristall-Bildelementen angesammelten Ladungen bilden, um dadurch eine Änderung des Bezugspotentials zu verhindern.

7. Flüssigkristallanzeigevorrichtung nach Anspruch 1, bei der die Entladungseinrichtung im Inneren einer Flüssigkristalltafel angeordnet ist, die die Anzeigeelemente (PXL) und die PIxeltransistoren (Tr) enthält.

8. Flüssigkristallanzeigevorrichtung nach Anspruch 1, bei der die Entladeeinrichtung außerhalb einer Flüssigkristallanzeigetafel vorhanden ist, die die Anzeigeelemente (PXL) und die Pixeltransistoren (Tr) enthält.

## Revendications

1. Dispositif d'affichage à cristaux liquides à matrice active comprenant :
une pluralité d'éléments d'affichage (PXL) agencés dans une matrice, chaque élément d'affichage (PXL) comprenant des électrodes opposées avec, entre elles, un matériau de cristaux liquides et associé à un transistor de pixel (Tr), lesdites électrodes opposées comprenant une électrode de pixel (E) et une électrode commune (COM) ;
des moyens de transmission (TG) destinés à fournir un signal vidéo (Vsig) à l'électrode de pixel (E) à travers une ligne de signal (4) et un transistor de pixel correspondant (Tr) ;
des moyens destinés à fournir une tension de référence (Vcom) à l'électrode commune (COM) ;
des moyens (3) destinés à mettre tous les transistors d'élément d'image (Tr) à l'état passant et
des moyens (8) destinés à mettre tous les moyens de transmission (TG) dans une condition de conduction
lorsque le fonctionnement en courant alternatif ordinaire est achevé ;
des moyens (9) destinés à décharger la charge accumulée dans les éléments d'affichage (PXL) en connectant l'électrode commune (COM) et l'électrode de pixel (E),
de telle manière qu'en fonctionnement une boucle fermée soit formée depuis lesdites électrodes communes (COM), via lesdites lignes de signal (4), lesdits transistors de pixel (Tr) à l'état passant, jusqu'auxdites électrodes de pixel (E) et avec les moyens de transmission (TG) dans la condition de conduction.

2. Dispositif d'affichage à cristaux liquides à matrice active selon la revendication 1 comprenant, de plus, une borne d'entrée (R, G, B) connectée aux lignes de signal (4) et une borne commune (C) connectée aux électrodes communes (COM) et dans lequel lesdits moyens de décharge (9) sont prévus entre les bornes d'entrée et commune.

3. Dispositif d'affichage à cristaux liquides à matrice active selon la revendication 1 ou 2, dans lequel lesdits moyens de décharge (9) comprennent un élément de commutation (SW).

4. Dispositif d'affichage à cristaux liquides à matrice active selon la revendication 1 ou 2, dans lequel lesdits moyens de décharge (9) comprennent un élément de résistance élevée (Rh).

5. Dispositif d'affichage à cristaux liquides à matrice active selon la revendication 1 comprenant, de plus, une borne de masse (GND) connectée à une ligne interne de masse (VVSS, HVSS), une borne commune (C) connectée aux électrodes communes (COM) et un élément de protection (11) intercalé entre ladite ligne interne de masse et chacune desdites lignes de signal (4), tandis que lesdits moyens de décharge comprennent un élément de résistance élevée (R2) connecté entre ladite borne de masse (GND) et ladite borne commune (C), de telle manière qu'une boucle de décharge fermée soit formée à partir de chacune desdites électrodes communes (COM), de ladite borne commune (C), dudit élément de résistance élevée (R2), de ladite borne de masse (GND), de ladite ligne interne de masse (VVSS, HVSS), dudit élément de protection (11), d'une desdites lignes de signal (4), d'un desdits transistors de pixel (Tr) et d'une desdites électrodes de pixel (E), dans l'ordre.

6. Procédé de commande d'un dispositif d'affichage à cristaux liquides du type à matrice active qui comprend une pluralité d'éléments d'affichage à cristaux liquides formés à partir d'une couche de cristaux liquides maintenue entre une pluralité d'électrodes d'élément d'image agencées dans une matrice et une pluralité d'électrodes communes opposées auxdites électrodes d'élément d'image et une pluralité d'éléments de commutation pour commuter individuellement lesdits éléments d'image à cristaux liquides et dans lequel lesdits éléments d'image à cristaux liquides sont commandés pour être inversés par courant alternatif avec référence à un potentiel de référence prédéterminé, comprenant l'étape consistant à :
connecter lesdites électrodes communes et lesdites électrodes d'élément d'image à un potentiel égal pour chacune d'elles, avant que la commande par courant alternatif soit reprise après avoir été arrêtée, via des lignes de signal et lesdits éléments de commutation en condition de conduction formant une boucle fermée pour décharger la charge accumulée dans lesdits éléments d'image à cristaux liquides pour empêcher, de ce fait, la variation du potentiel de référence.

7. Dispositif d'affichage à cristaux liquides selon la revendication 1, dans lequel lesdits moyens de décharge sont prévus à l'intérieur d'un panneau à cristaux liquides comprenant lesdits éléments d'affichage (PXL) et lesdits transistors de pixel (Tr).

8. Dispositif d'affichage à cristaux liquides selon la revendication 1, dans lequel lesdits moyens de décharge sont prévus sur l'extérieur d'un panneau à cristaux liquides comprenant lesdits éléments d'affichage (PXL) et lesdits transistors de pixel (Tr).
